# EUROPÄISCHE PATENTANMELDUNG

(11) **EP 1 337 067 A2**
(43) Veröffentlichungstag der Anmeldung: **20.08.2003**
(21) Anmeldenummer: 03003054.8
(22) Anmeldetag: 12.02.2003
(51) Int. Cl.: H04L 1/18

(54) **Verfahren und Anordnung zur Datenübertragung in einer Mehrpunktverbindung**

(30) Priorität: 13.02.2002 DE 10205901
(71) Anmelder: Tenovis GmbH & Co. KG, 60326 Frankfurt (DE)
(72) Erfinder: Hummel, Walter, 60388 Frankfurt (DE)
(74) Vertreter: Heinze, Ekkehard, Dipl.-Phys. Dr.

(57) **Zusammenfassung**

Verfahren zur Datenübertragung in einer Mehrpunktverbindung von einer Ursprungsapplikation (11) an wenigstens zwei Zielapplikationen (12, 13), mit folgenden Schritten: Bereitstellen (81) der zu übertragenden Daten sowie einer Liste der Adressen der Zielapplikationen (12, 13) durch die Ursprungsapplikation (11) an eine Steuereinrichtung (31), Steuern einer Sendeeinrichtung (51), die die Daten an Empfangseinrichtungen (62, 63) überträgt, die den jeweiligen Zielapplikationen (12, 13) zugeordnet sind, durch die Steuereinrichtung und Erstellen jeweils einer Empfangsquittung durch die Empfangseinrichtungen (62, 63) und Bereitstellen der Daten für die zugeordnete Zielapplikation nach Beenden der Datenübertragung und Senden (87, 88) der Quittungen an die Sendeeinrichtung (51).

## Beschreibung

Die Erfindung betrifft ein Verfahren zur Datenübertragung mit einer Mehrpunktverbindung gemäß dem Oberbegriff des Patentanspruchs 1 und eine Anordnung zur Durchführung des Verfahrens gemäß dem Oberbegriff des Patentanspruchs 7.

Mit der Entwicklung des Internet vom kleinen aber exklusiven Netzwerk der akademischen Forschungsgemeinde hin zu einem global und allgemein zugänglichen Kommunikationsmedium für jedermann haben sich auch die Anwendungen im Internet grundlegend verändert. Statt bloßem Datenaustausch zwischen einzelnen Rechnern oder Subnetzen wird das Internetz immer mehr zu einem universellen Kommunikationsmedium. Echtzeit-Multimedianwendungen wie Video- und Audiokonferenzen, verteiltes Lernen, Telefonie- oder Geschäftstransaktionen, Homebanking, Nachrichtenverteilung, Subscriptionssysteme und das virtuelle Kaufhaus sind nur einige Stichworte, die mit diesen neuen Anwendungen verbunden sind. Dabei basieren viele dieser Anwendungen auf der Verteilung von gleichen Daten von einem Server an viele Empfänger. Als Beispiele seien hier Videos oder Börsen- und Finanzdaten erwähnt.

Die ursprünglich für Anwendungen im Internet verwendeten Technologien müssen für jeden Empfänger eine Kopie der Daten auf die Leitung schicken. Diese Redundanz führt nicht nur zu einem hohen Ressourcenverbrauch, sondern auch zu entsprechend hohen kumulierten Übertragungszeiten, bis alle Empfänger die Daten erhalten haben.

So wie im globalen Internet stellt sich die Problematik auch für Unternehmen dar, die vor der Aufgabe stehen, regelmäßig große Datenmengen zeitkritisch an eine oder mehrere Gruppen von Empfängern im firmeneigenen Intranet zu versenden. Sind dabei neben dem LAN auch noch WAN-Strecken zu überwinden, so sind dem Performanceverlust durch die Redundanz der Multipointdatenübertragung oft noch entsprechend hohe Gebühren für die Übertragungsleitung zu verzeichnen.

Um dieses Problem zu lösen, wurden Verfahren zur Datenübertragung mit einer Mehrpunktverbindung bzw. Multicastverbindung entwickelt. Bei einer Datenübertragung mit einer Multicastverbindung werden Daten nur einmal vom Sender in das multicastfähige Netz geschickt und es ist Aufgabe der jeweiligen Router an ihren Verzweigungen, die Datenpakete ggf. zu duplizieren und in die jeweiligen Netzsegmente weiterzusenden. Das bedeutet, dass die zu übermittelnden Datenpakete einer Datei nur einmal über die Verbindungsstrecke von Server zu Router und von Router zu Router geschickt werden.

Vorteile eines solchen Vorgehens sind, dass der sendende Server entlastet und die Router nicht überflutet werden. Die Datenübertragung per Multicast ist nicht auf ethernet-basierende IP-Netze beschränkt, sondern läßt sich ebenso über ATM, Frame-Relay, SMDS (Datex-M) und Sateliten-Verbindungen betreiben.

Leider haben die Multicast-Verfahren bislang den gravierenden Nachteil, dass die Datenübertragung nicht gesichert stattfindet. Das bedeutet, dass der Auftraggeber bzw. Sender keine Information darüber erhält, ob und inwieweit alle Empfänger die entsprechenden Daten erhalten haben.

Der vorliegenden Erfindung liegt daher die Aufgabe zugrunde, ein Verfahren zur Datenübertragung mit einer Mehrpunktverbindung bzw. Multicastverbindung zur Verfügung zu stellen, bei dem die Datenübertragung überwacht wird und gesichert erfolgen kann. Desweiteren ist es Aufgabe der Erfindung, eine Anordnung zur Durchführung des Verfahrens zur Verfügung zu stellen.

Diese Aufgabe wird verfahrensseitig durch die Merkmale des Patentanspruchs 1 und vorrichtungsseitig durch die Merkmale des Patentanspruchs 5 gelöst.

Ein wesentlicher Punkt der Erfindung liegt darin, dass eine Ursprungsapplikation die zu übertragenden Daten und die Zieladressen einer Steuereinrichtung bereitstellt, die dann den Auftrag der Datenübertragung ausführt. Nach Beenden der Übertragung der Daten zu den Zielen bzw. Empfängern quittiert sie der Ursprungsapplikation die Auftragsausführung. Ferner werden die zu übertragenden Daten nicht direkt den Zielapplikationen, sondern diesen zugeordneten weiteren Steuervorrichtungen gesendet, die nach Beenden der Datenübertragung und Quittieren des Empfangs an den Absender die empfangenen Daten der Zielapplikation bereitstellen. Die eigentliche Datenübertragung findet somit zwischen den den jeweiligen Applikationen zugeordneten Steuervorrichtungen statt, die dafür jeweils eine Sende- und eine Empfangseinrichtung aufweisen.

In einer vorteilhaften Ausführungsform des erfindungsgemäßen Verfahrens werden die von den Empfangseinrichtungen erstellten Quittungen durch eine Prüfeinrichtung überprüft. In Abhängigkeit der Prüfung wird die Datenübertragung an diejenigen Empfangseinrichtungen wiederholt, die die zu übertragenden Daten nicht und/oder nicht vollständig empfangen haben.

In einer bevorzugten Ausführungsform wird nach einer durch die Prüfeinrichtung vorgegebenen Anzahl von Wiederholungsversuchen der Datenübertragung an eine Empfangseinrichtung die Übertragung an diese abgebrochen. Die Adresse der zugeordneten Zielapplikation wird aus der Adressliste gelöscht. Dadurch wird ermöglicht, dass bei einer fehlerhaften Datenübertragung mindestens ein weiterer Versuch der Übertragung durchgeführt wird. Erst wenn mehrere Übertragungsversuche fehlschlagen, wird die entsprechende Zielapplikation aus der Adressliste gelöscht, und die Übertragung an andere Zielapplikationen kann unverzüglich fortgesetzt werden.

Bei einer bevorzugten Ausführung der Erfindung werden die übertragenen Daten der jeweiligen Zielapplikation durch die Empfangseinrichtung erst nach Beenden der Datenübertragung bereitgestellt. Dadurch wird gewährleistet, dass nur ein vollständig übertragener Datensatz der Zielapplikation zur Verfügung gestellt wird.

In einer weiteren vorteilhaften Ausführungsform erstellt die Steuereinrichtung nach Beenden der Datenübertragung eine Quittung mit dem Resultat der durchgeführten Überprüfung. Diese Quittung wird der Ursprungsapplikation bereitgestellt. Bevorzugt enthält die Quittung Information über die Qualität der Datenübertragung und/oder eine Liste der empfangenden Übertragungseinrichtungen. Dadurch erhält die Ursprungsapplikation eine Rückmeldung, ob ihr Auftrag vollständig und ordnungsgemäß ausgeführt wurde.

Die Rückmeldung und insbesondere die darin enthaltenen Angaben über die Qualität der Übertragung zu den einzelnen Clients/Zielen ermöglichen eine gezielte Modifikation der Übertragungsparameter für künftige Datenübertragungen. D.h. für störanfällige Datenstrecken kann dann z.B. die Übertragungsrate oder die verwendete Blockgröße der Datenpakete reduziert werden um so die Qualität wieder zu verbessern.

Vorteilhafte Aspekte der erfindungsgemäßen Anordnung ergeben sich weitgehend aus der vorstehenden Beschreibung der vorteilhaften Aspekte des erfindungsgemäßen Verfahrens.

Eine bevorzugte Ausführungsform der erfindungsgemäßen Anordnung weist einen der Ursprungsapplikation zugeordneten Datenspeicher auf, in dem die zu übertragenden Daten abgespeichert sind. Die Sendeeinrichtung liest die Daten aus diesem Datenspeicher aus, um sie an die jeweiligen Empfangseinrichtungen zu senden. Ebenso bevorzugt weist die Anordnung den Zielapplikationen zugeordnete Datenspeicher auf, auf denen die übertragenen Daten abgespeichert werden. Nach Beenden der Datenübertragung stellen die Empfangseinrichtungen der jeweiligen Zielapplikationen die Speicheradresse im Datenspeicher, die Datenmenge und/oder die Adresse der Ursprungsapplikation bereit.

In einer weiteren vorteilhaften Ausführungsform der erfindungsgemäßen Anordnung sind die Steuervorrichtungen über die Sende- und Empfangseinrichtungen mit einem Datenbus verbunden. Bevorzugt umfasst der Datenbus ein LAN oder alternativ das Internet.

Weitere Vorteile und Zweckmäßigkeiten sind der nachfolgenden Beschreibung des Ausführungsbeispieles in Verbindung mit den Zeichnung zu entnehmen. Von diesen zeigen:
Figur 1 schematisch eine erfindungsgemäße Anordnung und
Figur 2 ein Blockdiagramm für das erfindungsgemäße Verfahren.

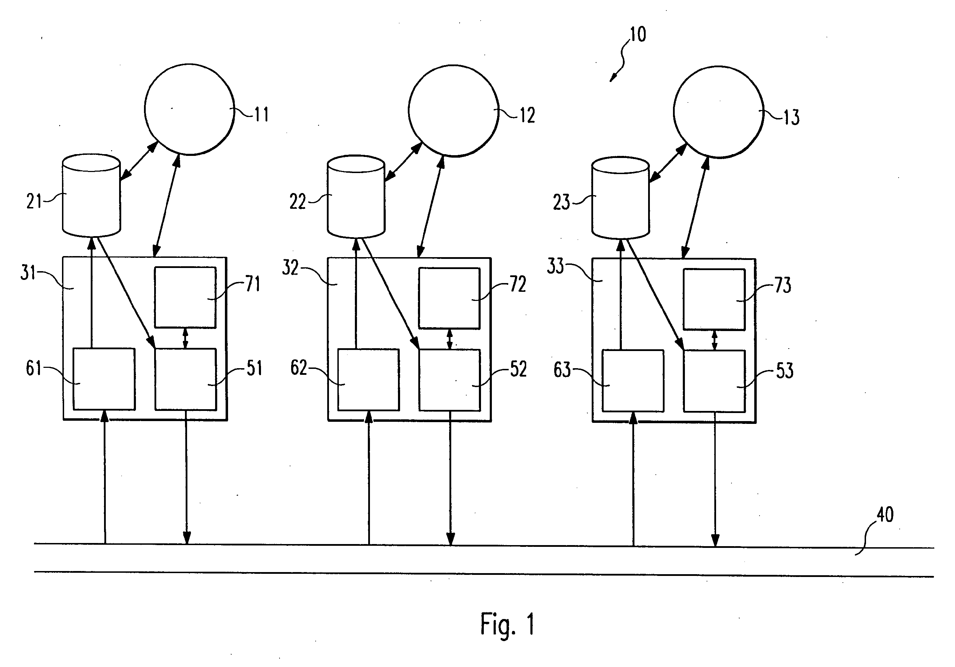

Figur 1 zeigt schematisch eine erfindungsgemäße Anordnung 10 mit verschiedenen Applikationen 11, 12, 13. Jeder der Applikationen 11, 12, 13 sind ein Speicher 21, 22, 23 und eine Steuereinrichtung 31, 32, 33 zugeordnet. Die Applikationen sind mit den Speichern verbunden, um darauf Daten zu schreiben und Daten zu lesen. Ferner weisen die Applikationen jeweils eine Verbindung mit den Steuereinrichtungen auf. Aufgrund dieser Kommunikationsmöglichkeit können die Applikationen Aufträge an die Steuereinrichtungen erteilen. Außerdem können auf diesen Weg Meldungen von den Steuereinrichtungen an die Applikationen übertragen werden.

Über einen Datenbus 40 sind die Steuereinrichtungen 31 , 32, 33 auch miteinander verbunden. Dieser Datenbus kann sowohl ein Intranet als auch das Internet sein. Es ist weiterhin denkbar, das der Datenbus eine Kombination beider Netze darstellt. So könnten die Steuervorrichtungen 31 und 32 mit einem Intranet in einer Firma verbunden sein, während die Steuervorrichtung 33 mit dem Internet verbunden ist. In diesem Fall müsste allerdings das Intranet einen Zugang zum Internet aufweisen.

Die Steuereinrichtungen weisen jeweils eine Sendevorrichtung 51, 52, 53, eine Empfangseinrichtung 61, 62, 63 und eine Prüfeinrichtung 71, 72, 73 auf. Die Sendeeinrichtungen 51, 52, 53 dienen dazu, Daten, die auf den Speichern 21, 22, 23 abgelegt sind, in den Datenbus 40 einzuspeisen.

Die Empfangseinrichtungen 61, 62, 63 empfangen diese Daten aus dem Datenbus 40. Die empfangenen Daten werden dann in die Speicher 21, 22, 23 geschrieben und abgelegt. Ferner erstellen die Empfangseinrichtungen 61, 62, 63 für die empfangenen Daten eine Empfangsquittung, die sie über den Datenbus 40 zurück an die Sendeeinrichtungen 51, 52, 53 senden.

Die Prüfeinrichtungen 71, 72, 73 überprüfen die Empfangsquittungen, die die zugeordnete Sendevorrichtung 31, 32, 33 erhalten hat. Gegebenenfalls wird eine Datenübertragung wiederholt, wenn wenigstens eine Empfangseinrichtung 61, 62, 63 nicht einen vollständigen und fehlerfreien Empfang quittiert hat.

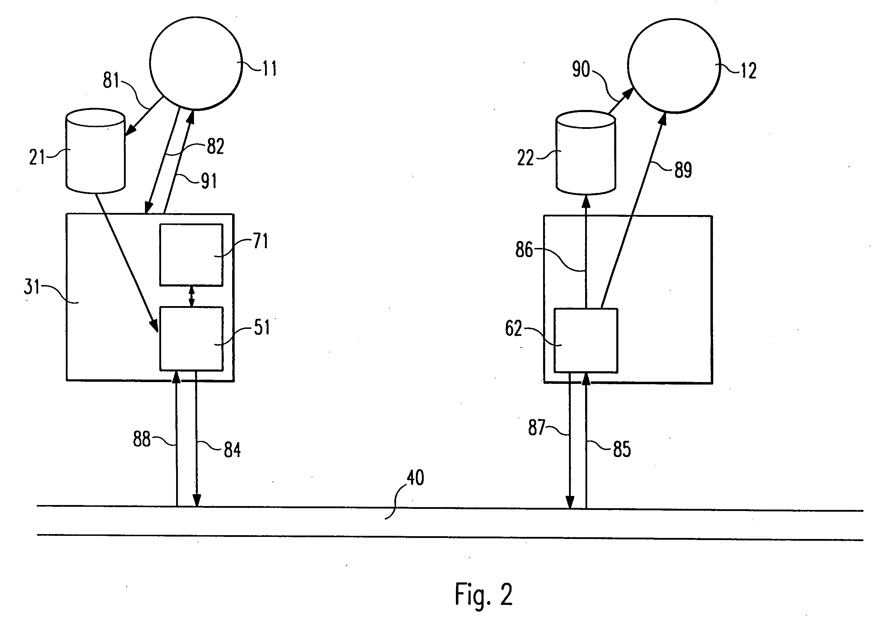

Im folgenden wird anhand der Figur 2 das erfindungsgemäße Verfahren beschrieben, wobei in der Figur 2 als Ausschnitt ein wesentlicher Teil der Anordnung aus Figur 1 dargestellt ist. In diesem Beispiel ist die Applikation 11 die Ursprungsapplikation, die eine bestimmte Datenmenge an mehrere weitere Zielapplikationen weiter gibt, von denen nur die Zielapplikation 12 dargestellt ist.

Die zu übertragende Datenmenge wird von der Ursprungsapplikation 11 in den Datenspeicher 21 geschrieben, was durch den Pfeil 81 angedeutet wird. Ferner erteilt die Applikation 11 der Steuereinrichtung 31 einen Auftrag, die in dem Speicher 21 abgelegten Daten weiter zu senden. Mit diesem Auftrag, der durch den Pfeil 82 angedeutet wird, teilt die Applikation 11 der Steuereinrichtung 31 die Speicheradresse der Datenmenge auf dem Speicher 21 und dem Umfang der zu senden Daten mit. Ferner enthält der Auftrag eine Liste der Adressen der Zielapplikationen.

Die Sendeeinrichtung 51 richtet daraufhin eine Multicast-Verbindung ein, um den Auftrag auszuführen. Hierzu liest sie einen ersten Datenblock aus dem Speicher 21, was durch den Pfeil 83 angedeutet ist. Diesen Datenblock sendet die Sendeeinrichtung 51, in dem sie den Datenblock in den Datenbus 40 stellt. Das Senden wird durch den Pfeil 84 dargestellt. Dieser Datenblock wird von der Empfangseinrichtung 62 aus dem Datenbus 40 empfangen, was durch den Pfeil 85 angedeutet ist.

Weiterhin empfangen alle weiteren Empfangseinrichtungen, die Zielapplikationen zugeordnet sind, diesen Datenblock. Zur vereinfachten Darstellung sind diese in der Figur 2 allerdings nicht gezeigt.

Die Empfangseinrichtung 62 speichert nun den empfangenen Datenblock in dem Speicher 22 ab. Hat die Empfangseinrichtung 62 den Datenblock vollständig empfangen, erstellt sie eine Empfangsquittung, die sie über den Datenbus 40 an die Sendeeinrichtung 51 zurücksendet. Dies wird durch die Pfeile 87 und 88 dargestellt.

Die in der Steuereinrichtung 31 angeordnete Prüfeinrichtung 71 überprüft die von der Empfangseinichtung 62 gesendete Empfangsquittung. Die Überprüfung der Quittung geht dahin, ob die jeweilige Empfangseinrichtung die gesendete Datenmenge vollständig oder fehlerhaft empfangen hat. Da mehrere Empfangseinrichtungen die Daten empfangen sollten, überprüft die Prüfvorrichtung 71 weiterhin, ob alle diese Empfangseinrichtungen eine Empfangsquittung ausgestellt haben.
Bei einer fehlerhaften Datenübertragung, entweder bei unvollständiger Übertragung oder im Fall, dass eine Empfangseinrichtung keine Quittung erstellt hat, sendet die Sendeeinrichtung 51 diesen Datenblock erneut an die Empfangseinrichtungen, die keine vollständige Datenübertragung quittiert hatten. Dieses wiederholte Senden ist auf eine bestimmte Anzahl von Versuchen begrenzt, wobei die Anzahl in der Prüfeinrichtung 71 vorprogrammiert oder durch Programmierung im laufenden Betrieb einstellbar ist. Sollten alle Versuche scheitern, diese Datenmengen an die entsprechenden Empfangseinrichtungen zu übertragen, so werden die Zielapplikationen, denen diese Empfangseinrichtungen zugeordnet sind, aus der Adressliste der Zielapplikationen gelöscht. Anschließend kann die Datenübertragung der folgenden Datenblöcke an die übrigen Empfangseinrichtungen fortgesetzt werden.

Sobald der letzte Datenblock der zu übertragenden Datenmenge, die in dem Speicher 21 abgespeichert ist, an die Empfangseinrichtung 62 gesendet und der vollständige Erhalt durch die Empfangseinrichtung 62 bestätigt wurde, teilt die Empfangseinrichtung 62 der Zielapplikation 12 mit, dass sie Daten für die Zielapplikation 12 empfangen hat. Mit dieser Meldung erhält die Zielapplikation 12 die Information, unter welcher Speicheradresse im Speicher 22 die Datenmenge abgelegt ist, sowie den Umfang der dort abgelegten Daten. Ferner meldet die Empfangseinrichtung 62 der Zielapplikation 12 den Absender, d. h. die Adresse der Ursprungsapplikation 11. Dies wird durch den Pfeil 89 angedeutet.

Die Zielapplikation 12 kann nun durch den Datenspeicher 22 die entsprechende Datenmenge auslesen, was durch den Pfeil 90 angedeutet ist.

Nach Beendigung der Datenübertragung wird die Multicast-Verbindung von der Sendeeinrichtung 51 deaktiviert. Anschließend meldet die Steuereinrichtung 31 der Ursprungsapplikation 11 den Abschluss der Datenübertragung, was durch den Pfeil 91 in der Figur dargestellt wird. Diese Meldung enthält eine Liste aller Empfänger, d. h. Zielapplikationen, sowie das Ergebnis der Übertragung für jede einzelne Zielapplikation. Die Ursprungsapplikation 11 erhält somit die Information, welche Zielapplikation die Daten fehlerfrei erhalten hat, bei welcher Zielapplikation die Datenübertragung mit Fehlern behaftet war und welche Zielapplikation nicht erreichbar war. Die Ursprungsapplikation 11 erhält somit eine vollständige Rückmeldung für den von Ihr aufgegebenen Auftrag 82.

Es ist ebenso denkbar, dass - in Abwandlung des vorstehend beschriebenen Beispiels - nicht die Empfangseinrichtung 62 eine Empfangsquittung erstellt. Die Empfangseinrichtung 62 kann der Steuereinrichtung 32 melden, dass sie einen Datenblock erhalten und auf dem Speicher 22 gespeichert hat. Anschließend erstellt dann die Steuereinrichtung 32 die Empfangsquittung und stellt die Quittung der Sendeeinrichtung 52 bereit. Diese wiederum sendet diese Quittung über den Datenbus 40 zur Empfangseinrichtung 61. Die Empfangseinrichtung 61 meldet anschließend der Prüfeinrichtung 71 den Erhalt dieser Quittung, sowie aller weiteren Quittungen, die die Empfangseinrichtung 61 von anderen Sendeeinrichtungen über den Datenbus 40 empfängt.

An dieser Stelle sei darauf hingewiesen, dass alle oben beschriebenen Teile für sich alleine gesehen und in jeder Kombination, insbesondere die in der Zeichnung dargestellten Details, als Erfindung wesentlich beansprucht werden. Abänderungen hiervon sind dem Fachmann geläufig.

### Bezugszeichenliste

- 10: Anordnung
- 11, 12, 13: Applikation
- 21, 22, 23: Speicher
- 31, 32, 33: Steuereinrichtung
- 40: Datenbus
- 51, 52, 53: Sendeeinrichtung
- 61, 62, 63: Empfangseinrichtung
- 71, 72, 73: Prüfeinrichtung
- 81: Schreiben von Daten
- 82: Auftrag
- 83, 90: Lesen von Daten
- 84, 87: Senden
- 85, 88: Empfangen
- 86: Schreiben
- 89, 91: Melden

## Patentansprüche

1. Verfahren zur Datenübertragung in einer Mehrpunktverbindung von einer Ursprungsapplikation (11) an wenigstens zwei Zielapplikationen (12, 13), **gekennzeichnet durch** folgende Schritte:
Bereitstellen (81) der zu übertragenden Daten sowie einer Liste der Adressen der Zielapplikationen (12, 13) **durch** die Ursprungsapplikation (11) an eine Steuereinrichtung (31),
Steuern einer Sendeeinrichtung (51), die die Daten an Empfangseinrichtungen (62, 63) überträgt, die den jeweiligen Zielapplikationen (12, 13) zugeordnet sind, **durch** die Steuereinrichtung und
Erstellen jeweils einer Empfangsquittung **durch** die Empfangseinrichtungen (62, 63) und Bereitstellen der Daten für die zugeordnete Zielapplikation nach Beenden der Datenübertragung und Senden (87, 88) der Quittungen an die Sendeeinrichtung (51).

2. Verfahren nach Anspruch 1,
**dadurch gekennzeichnet, dass**
eine Prüfeinrichtung (71) die Empfangsquittungen durch eine Prüfeinrichtung (71) überprüft und in Abhängigkeit vom Ergebnis der Überprüfung die Datenübertragung an die Empfangseinrichtungen (62, 63) wiederholt wird, die die zu übertragenden Daten nicht vollständig empfangen haben.

3. Verfahren nach Anspruch 2,
**dadurch gekennzeichnet, dass**
bei Erreichung einer durch die Prüfeinrichtung (71) vorgegebenen Anzahl von Übertragungswiederholungen an eine der Empfangseinrichtungen (62, 63) die Steuereinrichtung (31) einen Abbruch der Datenübertragungen an diese Empfangseinrichtung(62, 63) bewirkt und die Adresse der zugeordneten Zielapplikation (12, 13) aus der Adressliste löscht.

4. Verfahren nach einem der vorstehenden Ansprüche,
**dadurch gekennzeichnet, dass**
die Steuereinrichtung (31) nach Beenden der Datenübertragungen ein Übertragungsprotokoll mit einer Liste der beteiligten Empfangseinrichtungen dem Resultat der durch die Prüfeinrichtung (71) durchgeführten Überprüfung erstellt und der Ursprungsapplikation (11) bereitstellt.

5. Anordnung zur Durchführung des Verfahrens nach einem der vorstehenden Ansprüche,
mit einer Mehrzahl von Applikationen (11, 12, 13), die auf verschiedenen Endgeräten implementiert sein können, Steuereinrichtungen (31, 32, 33), die jeweils einer der Applikationen zugeordnet sind und jeweils eine Sende- (51, 52, 53) und eine Empfangseinrichtung(61, 62, 63) aufweisen,
wobei jede Sendeeinrichtung (51) zur Übertragung von Daten an mehrere Empfangseinrichtungen (62, 63) und jede Empfangseinrichtung davor ausgebildet ist, nach Beenden der Datenübertragung eine Quittung zu erstellen und diese der jeweiligen Sendeeinrichtung (51) zurückzusenden.

6. Anordnung nach Anspruch 5,
**dadurch gekennzeichnet, dass**
jede Steuereinrichtung (31, 32, 33) eine Prüfeinrichtung (71, 72, 73) umfasst, die zur Überprüfung der Empfangsquittungen ausgebildet ist.

7. Anordnung nach Anspruch 5 oder 6,
**dadurch gekennzeichnet, dass**
die Anordnung einen Sende-Pufferspeicher (21) umfasst, der der Ursprungsapplikation (11) zugeordnet ist und auf dem die zu übertragenden Daten gespeichert sind, und dass die Sendeeinrichtung (51) die Daten aus dem Sende-Pufferspeicher (21) liest und an die Empfangseinrichtungen (51) sendet.

8. Anordnung nach einem der Ansprüche 5 bis 7,
**dadurch gekennzeichnet, dass**
die Anordnung ferner Empfangs-Pufferspeicher (22, 23) umfasst, die den Zielapplikationen (12, 13) zugeordnet sind,
wobei die Empfangseinrichtungen (62, 63) die übertragenen Daten in den Empfangs-Pufferspeichern (22, 23) abspeichern und nach Beenden der Datenübertragung der jeweiligen Zielapplikation (12, 13) die Speicheradresse und wahlweise die Datenmenge und/oder die Adresse der Ursprungsapplikation (11) bereitstellen.

9. Anordnung nach einem der Ansprüche 5 bis 8,
**dadurch gekennzeichnet, dass**
die Steuereinrichtungen (31, 32, 33) über die Sende- (51, 52, 53) und Empfangseinrichtungen (61, 62, 63) mit einem Datenbus (40), über einen anderen LAN oder dem Internet, verbunden sind.
